Europäisches Patentamt

European Patent Office

Office européen des brevets

(19)

(11) Veröffentlichungsnummer: **0 175 173**
**B1**

(12) **EUROPÄISCHE PATENTSCHRIFT**

(45) Veröffentlichungstag der Patentschrift:
28.06.89

(51) Int. Cl.⁴: **B 65 B 25/06**

(21) Anmeldenummer: 85110665.8

(22) Anmeldetag: 24.08.85

(54) Verfahren zur Herstellung von in kompakter Form in einem Netz gegarten Fleischwaren und Vorrichtung zur verfahrensgemässen Fleischvorbereitung.

(30) Priorität: 28.08.84 DE 3431521

(43) Veröffentlichungstag der Anmeldung:
26.03.86 Patentblatt 86/13

(45) Bekanntmachung des Hinweises auf die Patenterteilung: 28.06.89 Patentblatt 89/26

(84) Benannte Vertragsstaaten:
AT BE DE FR GB IT LU NL SE

(56) Entgegenhaltungen:
DE–A– 3 012 622
DE–A– 3 216 340
DE–B– 1 210 709
DE–C– 665 571
FR–A– 1 058 694
FR–A– 1 176 623
FR–A– 2 150 278
GB–A– 2 099 392
NL–A– 7 112 150
US–A– 1 505 218
US–A– 2 922 186
US–A– 3 732 113
US–A– 4 155 212

(73) Patentinhaber : Naturin-Werk Becker & Co.
Badeniastrasse 13
D-6940 Weinheim/Bergstrasse (DE)

(72) Erfinder : Winkler, Bruno
Am Hummelberg 9
D-6940 Weinheim-Oberflockenbach (DE)

(74) Vertreter : Klöpsch, Gerald, Dr.-Ing.
An Gross St. Martin 6
D-5000 Köln 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von in kompakter Form durch Räuchern und/oder Erwärmen in einem insbesondere elastischen Netz gegarten Fleischwaren, insbesondere Kochschinken und eine Vorrichtung zur Durchführung des Verfahrens.

Gekochter Schinken ist eine beliebte Fleischware, die fabrikmäßig und handwerklich hergestellt wird. Dazu wird ausgelöster Schweinehinterschinken in der Regel gepökelt, mild geräuchert und bei 70 bis 75° gebrüht.

Wegen des großen Bedarfs werden heute üblicherweise auch andere große Muskelpartien des Schweins verwendet, z. B. entbeinte Vorderschinken oder Kammstücke. Soweit sie nicht in Dosen, Alufolien oder Därmen pasteurisiert werden, werden die Fleischteile zur Erhaltung der kompakten Form in einer Umschnürung oder einem Netz, insbesondere in einem elastischen Netz, gegart. Diese Methode und Vorrichtung zum Einbringen von Fleischwaren in geeignete Netze werden z. B. in der DE-GM 18 77 878 und DE-OS 22 29 917 beschrieben.

Wenngleich auf die herkömmliche Weise die kompakte Form der Fleischware gewährleistet ist, haftet dieser Vorgehensweise ein erheblicher Nachteil an ; unvermeidlich verkleben bei der notwendigen Behandlung des rohen oder vorgegarten Fleischs im Netz Gewebe und Netz fest miteinander. Wenn nun das Netz entfernt werden soll — etwa vor den Aufschneiden eines so hergestellten Kochschinkens — treten aufgrund dieser Verklebung immer große Verluste ein, weil nicht nur einzelne Muskelfasern, sondern ganze Fleischfetzen am Netz hängenbleiben und aus dem Schinken herausgerissen werden. Im Einzelfall kann dies dazu führen, daß die Ware unverkäuflich wird.

Dieses Problem wird auch nicht durch die NL-A-7 112 150 gelöst, die den nächstliegenden Stand der Technik hinsichtlich des Verfahrens darstellt. Dort wird die zu verpackende Fleischware zunächst in ein nicht elastisches Netz und dann in ein elastisches Außennetz verpackt, worauf die so in zwei Netze verpackte Ware gegart wird.

Aufgabe der vorliegenden Erfindung war es daher, ein Herstellungsverfahren aufzuzeigen, das es einerseits gestattet, derartige Fleischwaren unter Erhalt ihrer kompakten Form durch Räuchern und/oder Erhitzen zu garen und das andererseits eine intakte Oberfläche des vom Netz befreiten verkaufsfertigen Produkts garantiert. Im Stand der Technik wurde das Problem bislang nicht behandelt.

Die Aufgabe konnte jedoch überraschend dadurch gelöst werden, daß die rohen oder vorbehandelten Fleischstücke mit einer Umhüllung aus einer eßbaren Kollagenschicht und einem über dieser Umhüllung liegenden längs- und/oder querelastischen Netz versehen und in einem nachfolgenden Arbeitsgang dem endgültigen Garprozess unterworfen werden.

Unerwarteterweise verklebt diese eßbare Kollagenschicht im Gegensatz zur ebenfalls aus Proteinen bestehenden unbeschichteten Fleischoberfläche während des Räucherprozesses und/oder des Kochvorgangs nicht mit dem Netz.

Das erfindungsgemäße Herstellungsverfahren, bei dem im Anschluß an die Kollagenbeschichtung der Fleischoberfläche und die Aufbringung des formstabilisierenden Netzes die eigentliche Fertigstellung der Ware durch Räuchern, Erhitzen oder auf andere Weise erfolgt, gestattet es daher, kompakte, genußfertige Ware mit einwandfreier, geschlossener Oberfläche anzubieten, ohne daß das Produkt nach Entfernen des Netzes Beschädigungen aufwiese oder eine den Genusswert beeinträchtigende, als fleischfremde Substanz erkennbare Umhüllung vorhanden wäre.

Die Art der Aufbringung der eßbaren Kollagenschicht spielt für den erfindungsgemäßen Erfolg keine Rolle. Doch hat es sich gezeigt, daß es zu Beschädigungen der aus sensorischen Gründen notwendigerweise dünnen Kollagenumhüllung kommen kann, wenn das formstabilisierende Netz auf die Kollagenbeschichtung aufgebracht wird.

Überraschend wurde die Möglichkeit gefunden, durch gleichzeitiges Aufbringen von Kollagenumhüllung und Netz die Beschädigungsgefahr auszuschalten.

Als vorteilhafte Beschichtungsmethode hat sich dabei das Umhüllen der Ware mit einer fertigen Kollagenmembran erwiesen. Eine geeignete native Kollagenmembran stellt etwa das sogenannte Goldschlägerhäutchen dar, das aus dem Rinderbuttdarm gewonnen wird.

Vorteilhafter, weil unabhängig von der begrenzten Zahl der Rinderschlachtungen, von vornherein in hygienisch einwandfreier Form und in nahezu beliebigen Bahnengrößen herstellbar, ist die Anwendung eßbarer Kollagenfolien aus modifiziertem nativen Kollagen.

Diese sind bekanntermaßen als Schlauch- oder Flachfolien zugänglich. Sie werden z. B. in der DE-PS 642 922 beschrieben und können auf einer Foliengießmaschine, etwa gemäß DE-PS 842 825 und US-PS 2 747 228, hergestellt werden.

Solche Kollagenfolien finden in den verschiedensten Einsatzgebieten ihre Anwendung :

So z. B. in der Medizintechnik — wie in der US-PS 2 747 228 und der US-PS 3 014 024 angegeben — als Zwischenprodukt zur Herstellung von chirurgischen Nähfäden.

In der Lebensmitteltechnik werden Kollagenfolien z. B. nach DE-PS 19 45 527 als Hülle für Nahrungsmittel oder auch — nach US-PS 3 014 024 — zum Einwickeln von Fleischerzeugnissen verwendet. Das Kollagen kann zur Anpassung an den jeweiligen Einsatzzweck auf verschiedene Weise vorbehandelt werden. So beschreiben DE-PS 17 67 613 und 19 60 935 eine Enzymbehandlung des Ausgangsmaterials, die die Kollagenfolie heißwasserlöslich macht. Eine solche Folie wird zum Abpacken von portionierten Lebensmitteln verwendet, die in heißem Wasser zubereitet werden. Die ungeöffnete Pakung wird in heißes Wasser gegeben, wo die Folie sich auflöst und den Inhalt der Packung freigibt. Gemäß US-PS 3 664 849 wird eine naßfeste Folie aus enzymbehandeltem Kollagen zur Herstellung eines Fleischimbißerzeugnisses beschrieben.

Der Einsatz einer eßbaren Kollagen-Flachfolie zur Lösung des weiter oben geschilderten Problems der Netzhaftung bei kompakten, geräucherten und/oder erhitzten Fleischwaren, wie Kochschinken, Gänsebrust u. ä., findet sich im Stande der Technik nicht.

Der Zeitpunkt des Aufbringens von Kollagenschicht und Netz im Herstellungsprozeß ist von der jeweils zu bereitenden Fleischware abhängig. Bei einer Anwendung des erfindungsgemäßen Verfahrens auf beispielsweise die Herstellung von Kochschinken wird das Fleisch nach dem Pökeln mit eßbarer Kollagenfolie umhüllt und in ein elastisches Netz eingezogen.

Dadurch wird wie oben beschrieben, das Verkleben des Netzes mit dem Fleisch beim Kochen und eventuellen Räuchern wirksam verhindert.

Eine für das erfindungsgemäßen Verfahren geeignete eßbare Kollagen-Flachfolie wird aus dem Corium von Rinderhäuten gewonnen. Eine enthaarte Rinderhaut wird durch Schaben von Fleisch, Fett und Bindegewebe gereinigt. Zur Herstellung von Leder wird die äußere sogenannte Narbenseite in einer gleichmäßigen Stärke von 2 bis 4 mm je nach Verwendungszweck abgespalten. Der verbleibende innere Teil, der sogenannte Fleischspalt besteht aus dem eigentlichen Unterhautbindegewebe, dem Corium. Es stellt ein inniges Geflecht von Kollagenfasern dar, das mehr als 1 cm dick sein kann. Durch chemischen und mechanischen Aufschluß können die Kollagenfasern des Coriums in die Form einer gießbaren Masse gebracht und mit Weichmacher(n) und Vernetzungsmittel(n) versetzt werden. Es versteht sich dabei, daß diese und etwa vorhandene weitere Zusätze (Farbstoffe, Gleitmittel u. ä.) für eine Anwendung der Folie im erfindungsgemäßen Verfahren lebensmitteltauglich sein müssen.

Die Kollagenfasermasse wird dann in gleichmäßiger Stärke auf ein geeignetes Förderband gebracht, das durch einen Trockentunnel geführt wird, und dabei zur Folie getrocknet.

Eine, insbesondere bei unregelmäßig geformten Fleischstücken vorteilhafte Möglichkeit, das erfindungsgemäße Verfahren auszuführen, besteht darin, zwei eßbare Kollagen-Flachfolien von einander gegenüberliegenden Seiten des Fleischstücks aus um dieses herumzulegen, so daß sich die beiden Folien in ihren Randbereichen überlappen. Für das erfindungsgemäße Verfahren sind Folien in einer Dicke von 8 μm bis 40 μm, bevorzugt 10 μm bis 25 μm vorteilhaft. Die Folienbreite liegt, wenn — wie oben beschrieben — die Umhüllung mittels zweier Flachfolien erfolgen soll, für die meisten herkömmlichen kompakten Fleischwaren im Bereich von 12 cm bis 65 cm, bevorzugt im Bereich von 36 cm bis 57 cm. Solche Folien werden in der Regel in Rollenform geliefert und haben dann meist eine Länge von 30 m.

Das formerhaltende elastische Netz wird vorteilhaft als Schlauchnetz aufgebracht. Besonders verfahrensgeeignet sind endlos gewirkte, nahtlose Schlauchnetze, die aus elastischen Fäden in Querrichtung und nichtelastischen Fäden parallel zur Schlauchachse bestehen. Die mittlere Maschenweite des Netzes liegt für eine hinreichend sichere Formhaltung und gleichzeitige minimale Abschirmwirkung gegen die erforderliche Hitzeund/oder Raucheinwirkung im Bereich von 5 mm bis 15 mm, bevorzugt bei 10 mm. Die Maschenform ist für das Verfahren ohne Bedeutung. Der erforderliche Durchmesser des Netzes richtet sich nach dem Umfang der zu umhüllenden Fleischstücke und soll so bemessen sein, das das Netz dem kollagenumhüllten Fleisch eng anliegt.

Gegenstand der Erfindung ist ferner eine Vorrichtung zur Durchführung des Verfahrens, die durch den Anspruch 13 bzw. 18 definiert wird.

Geräte zum Aufziehen von Schlauchnetzen allein sind im Stand der Technik vorhanden.

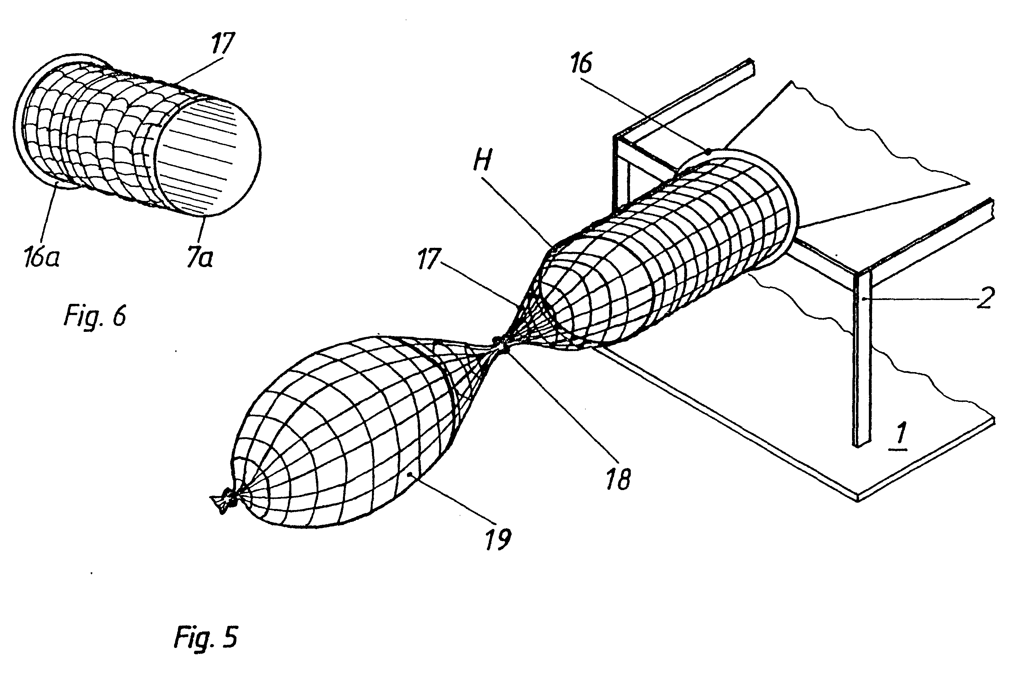

Die CA-PS 873 755 hat eine Vorrichtung zum Abtrennen und Aufziehen einer Länge von elastischem Netz auf eine Hülse zum Gegenstand. Dabei ist der Durchmesser der Hülse so groß, daß das elastische Netz in Querrichtung kräftig gedehnt wird, während es in Längsrichtung wie beim Raffen von Wursthüllen auf einen Bruchteil seiner Länge zusammengeschoben wird. In Figur 5 wird eine Hülse mit Netz dargestellt, wie sie auch bei unserer Vorrichtung verwendet werden könnte.

Das DE-GM 76 00 041 hat eine handbetriebene Vorrichtung zum Aufziehen von elastischem Schlauchnetz auf ein Füllrohr zum Gegenstand.

Die DE-OS 28 00 933 zeigt eine Verpackungsmaschine für Fleisch mit einem Zylinder, in den das Fleisch eingebracht wird, und einen mit Druckluft beaufschlagten Kolben, der das Fleisch in das über den Zylinder gezogene Netz treibt.

Aus der US-PS 3 732 113 ist eine Vorrichtung zur Umhüllung einer Fleischware mit einem Netz bekannt, die ein Führungsrohr für die Fleischware aufweist, welches gleichzeitig das Trägerrohr für das Schlauchnetz ist. Aufgabeseitig ist das Führungsrohr als Auflageblech bzw. Auflagefläche für die zu verpackende Fleischware ausgestaltet. Diese bekannte Vorrichtung entspricht dem Oberbegriff des Anspruchs 13 bzw. 18.

Allen aufgefundenen Druckschriften ist gemeinsam, daß es nicht vorgesehen und deshalb auch schlecht möglich ist, während des Verpackungsvorgangs zwischen das Fleisch und das Netz eine Folie einzubringen.

Die erfindungsgemäße Vorrichtung wird nun anhand der beigefügten Figuren erläutert, die die Erfindung illustrieren, ohne sie auf die dargestellten Ausführungsformen zu beschränken:

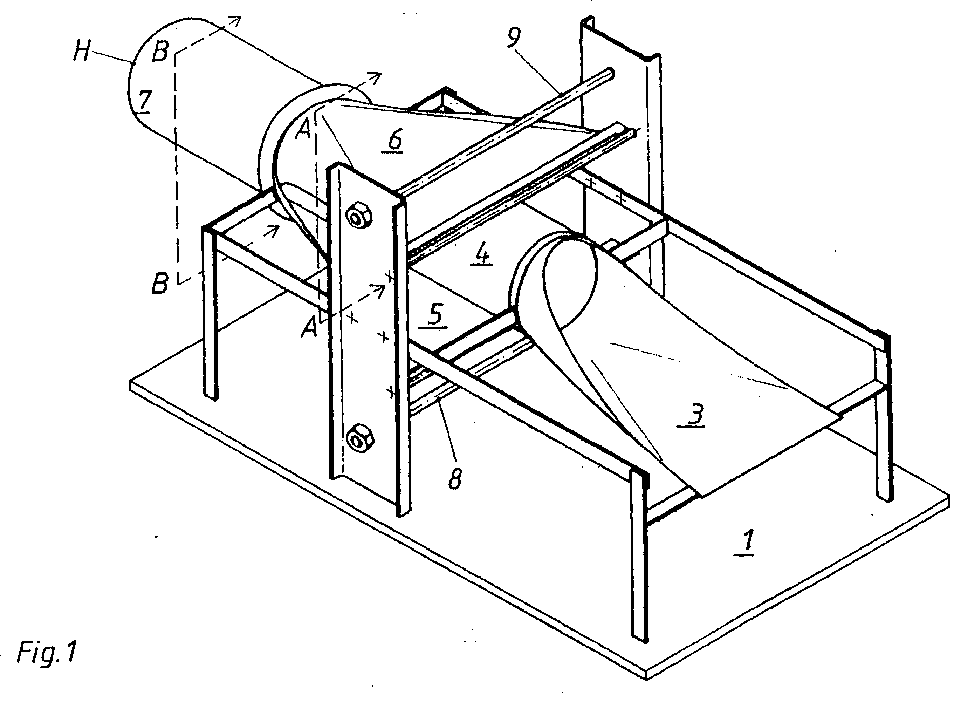

Figur 1 zeigt eine Ansicht der Vorrichtung in isometrischer Darstellung.

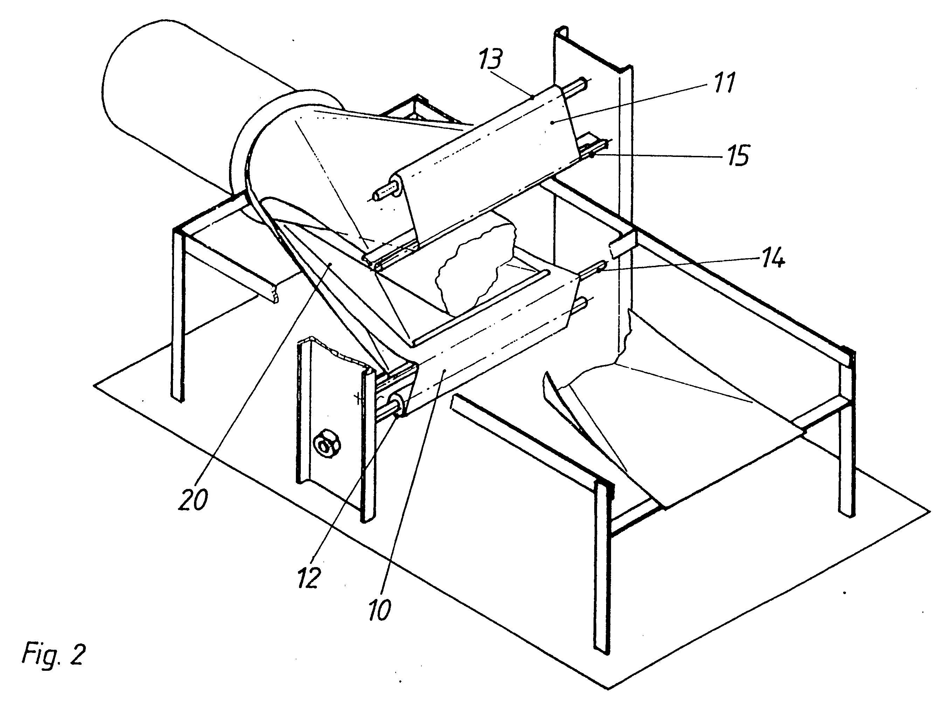

Figur 2 zeigt die gleiche Ansicht unter besonderer Hervorhebung des Wegs der Folienbahnen, wozu Teile der Vorrichtung durch Bruchlinien gekennzeichnet, weggelassen wurden.

Figur 3 zeigt einen Schnitt durch die erfindungsgemäße Vorrichtung wie in Figur 1 mit A-A angedeutet.

Figur 4 zeigt einen Schnitt durch die erfindungsgemäße Vorrichtung wie in Figur 1 mit B-B angedeutet.

Figur 5 zeigt eine Ansicht auf das hintere Ende (H) der Vorrichtung mit einem in ein Netz eingezogenen Schinken.

Figur 6 zeigt die an sich bekannte Netzkartusche zum Aufstecken zur Verwendung mit der Vorrichtung.

Figur 7 zeigt eine weitere Ausführungsform der Vorrichtung.

Figur 8 zeigt einen Läggsschnitt durch die Vorrichtung von Figur 7.

Die erfindungsgemäße Vorrichtung zeichnet sich dadurch aus, dass sie ein in ein Führungsrohr (4) übergehendes Einlegeblech (3) für die Fleischware aufweist und oberhalb und unterhalb des Führungsrohrs (4) Folienführungsbleche (5, 6) angebracht sind, die sich konisch verjüngend zum Ende (H) der Vorrichtung erstrecken, wobei eines der Führungsbleche (5, 6) in das das Führungsrohr (4) in seinem Endbereich umgebende Rohr (7) übergeht und das jeweils andere Folienführungsblech (6, 5) sich in Form eines Zylinderteilmantels in das Rohr (7) hinein erstreckt. Bevorzugt geht das untere Folienführungsblech (5) in das Rohr (7) über. Auf das Rohr (7) können mehrere Meter des Schlauchnetzes (17) zum Speichern aufgezogen werden.

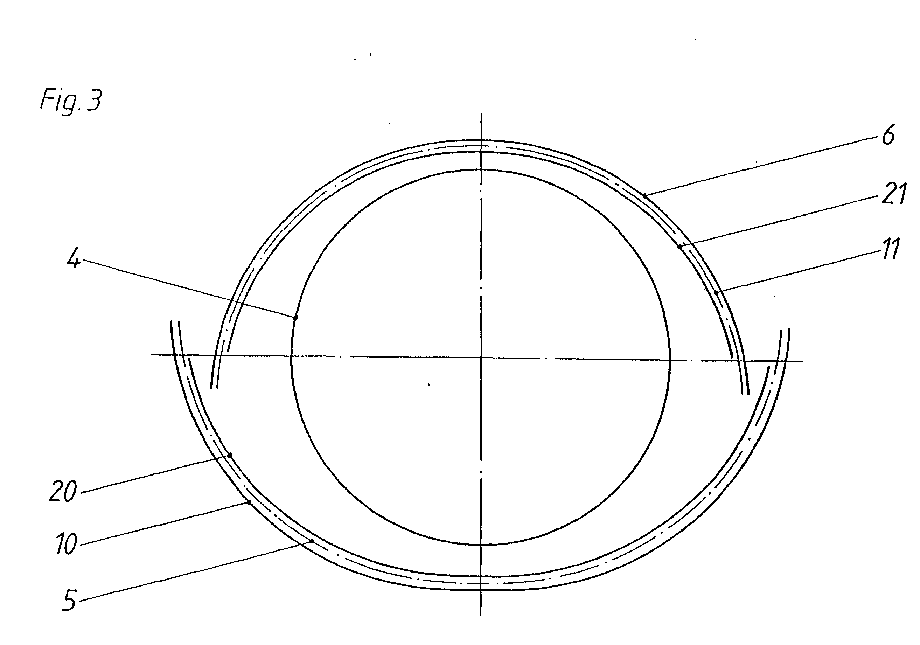

Zweckmäßig sing oberhalb des Folienführungsblechs (6) und unterhalb des Folienführungsblechs (5) im Bereich ihrer Anfangskanten stabförmige Rollenhalter (8, 9) für die Folienrollen (12, 13) und zwischen den Folienrollen (12, 13) und den Anfangskanten der Folienführungsbleche (5, 6) gegebenenfalls drehbare Rundstäbe (14, 15) angeordnet, über die die Folienbahnen in die erfindungsgemäße Vorrichtung hineingezogen werden. Des weiteren sind, wie in Figur 3 angedeutet, zwischen dem Führungsrohr (4) und den Folienführungsblechen (5, 6) parallel zu diesen und ebenso gerundet im Abstand von etwa 3 bis 5 mm Folienspreitbleche (20) und (21) angebracht, die verhindern, daß sich beim Nachziehen der Folien (10, 11) Längsfalten bilden.

In einer bevorzugten Ausführungsform ist die Scheitellinie des Zylinderteilmantels des in das Rohr (7) hineinragenden Folienführungsblechs (6) mit der Innenwand von (7) fest verbunden.

Die Funktionseinheit aus Blechen (3, 5, 6) und Rohren (4, 7) wird gemeinsam mit den entsprechenden Hilfseinrichtungen (8, 9, 14, 15) zweckmäßig von einer Rahmenkonstruktion (2) getragen, die auf eine Tischplatte (1) aufgeschraubt sein kann. In an sich bekannter Weise kann die Vorrichtung durch eine Clipvorrichtung zum Zusammenfassen und Verschliessen des Netzes ergänzt sein.

Auch ist es vorteilhaft, am Rohr (7) einen Flansch (16) anzubringen, an dem eine das schlauchförmige Netz (17) speichernde Kartusche (7a) mit einem Flansch (16a) — bevorzugt mit Bajonettverschluß (nicht dargestellt) lösbar befestigt werden kann.

Die Vorrichtung wird für das erfindungsgemäße Verfahren vorbereitet, indem die gewünschte Menge Schlauchnetz (17) auf das Rohr (7) aufgezogen wird und die Rollenhalter (8) und (9) mit Folienrollen (12) und (13) bestückt werden. Die Folien (10) und (11) werden um die Rundstäbe (14) und (15) herum und zwischen den Folienführungsblechen (5) bzw. (6) und den Spreitblechen (20) bzw. (21) hindurch und dann zwischen den Rohren (4) und (7) durch die Vorrichtung nach (H) geführt.

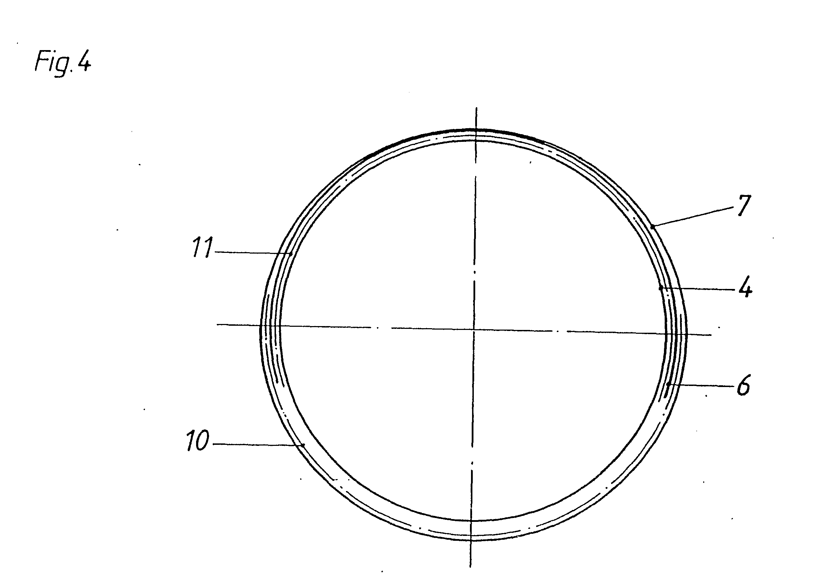

Die beiden Flachfolien (10) und (11) sind in ihrem Überlappungsbereich, wie in Figur 4 gezeigt, innerhalb des Rohrs (7) der erfindungsgemäßen Vorrichtung durch das in diesem Bereich zylinderteilmantelförmige Folienführungsrohr (6) getrennt.

Das Schlauchnetz (17) wird eine Handbreit vom Rohr (7) abgezogen und zusammen mit den darin befindlichen Enden der Folienbahnen (10) und (11) kurz hinter dem Ende der Folienbahnen mittels eines Clips — beispielsweise eines Metallclips — zusammengefasst und verschlossen. Geeignete Clipvorrichtungen sind handelsüblich und werden nicht gezeigt.

Zur Durchführung des Verfahrens wird ein Stück gepökelten Schinkens auf das Einlegeblech (3) gelegt und mit einem — nicht dargestellten — Stößel durch das Führungsrohr (4) bis zum Ende (H) geschoben, ohne daß das Fleisch mit den Folien in Berührung kommt. Dadurch bleibt die Kollagen-Folien trocken und gleitfähig. Am Ende der Vorrichtung trifft nun der Schinken auf das mit einem Clip (18) verschlossene Ende des Schlauchnetzes (17) und die darin befindlichen Folienbahnen (10) und (11). Durch Weiterschieben wird der Schinken (19) mit den Folien (10) und (11), die einander seitlich überlappen, eingehüllt und gleichzeitig in das elastische Schlauchnetz (17) eingezogen. Der mit dem Netz und der darunterliegenden Kollagenfolie umhüllte Schinken (19) wird dann so weit von der Vorrichtung fortgezogen, daß sein der Vorrichtung zugewandtes Ende zwei Handbreit von dieser entfernt ist. Netz (17) und Folienbahnen (10) und (11) werden ungefähr in der Mitte zwischen Vorrichtungs- und Schinkenende mit einem Clip (18) zusammengefasst und verschlossen. Das Netz samt Folie wird neben dem Clip (18) auf der Seite des eingezogenen Schinkens (19) durchtrennt, stramm über das Ende des Schinkens (19) gezogen und mit einem weiteren Clip verschlossen. Dabei kann auch eine Aufhängeschlaufe mit eingeclip werden. Das Fleischstück ist damit zum Räuchern und/oder Garen im Kochschrank vorbereitet. Die Vorrichtung ist schon nach dem Durchschneiden des Netzes neben dem Clip (18) bereit, den nächsten Schinken einzuziehen.

Eine andere einfache Methode, vorbehandelte Fleischstücke in eine Kollagenfolie und zugleich in ein elastisches Netz einzuziehen, besteht darin, eine Folie von einer Vorratsrolle abzuziehen und über eine üblichen Formschulter zu einem Schlauch mit lose überlappenden Seitenkanten zu formen und zwischen das Fleischstück und das außen liegende Schlauchnetz zu führen. Bei dieser Verfahrensweise wird also die Kollagenfolie in einer einzigen Folie auf die Fleichwaren aufgebracht.

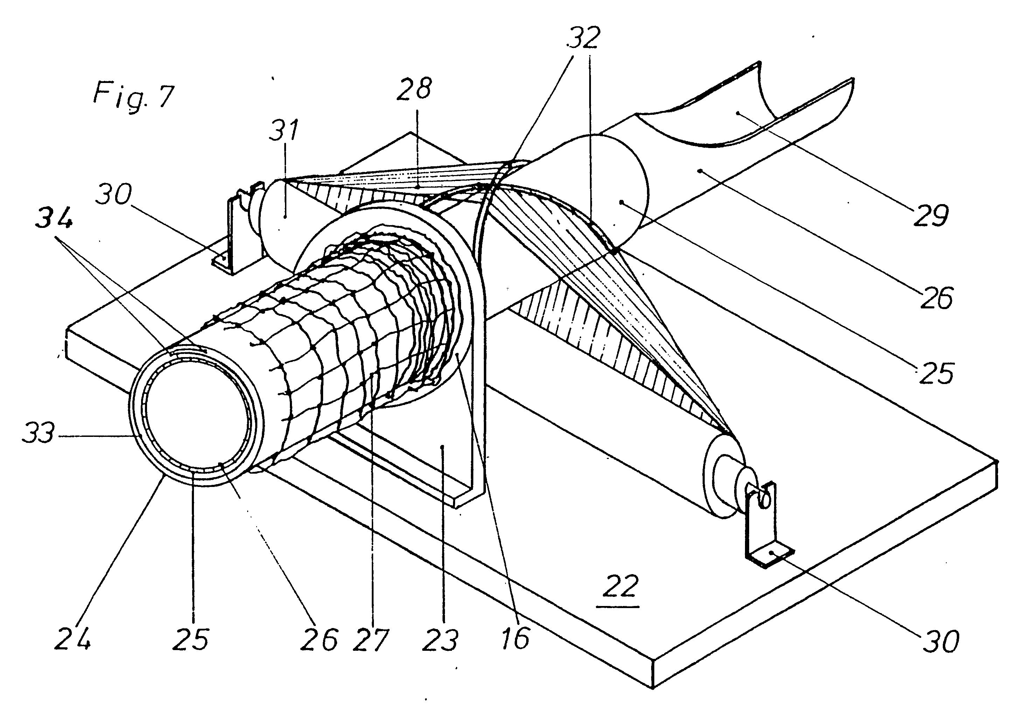

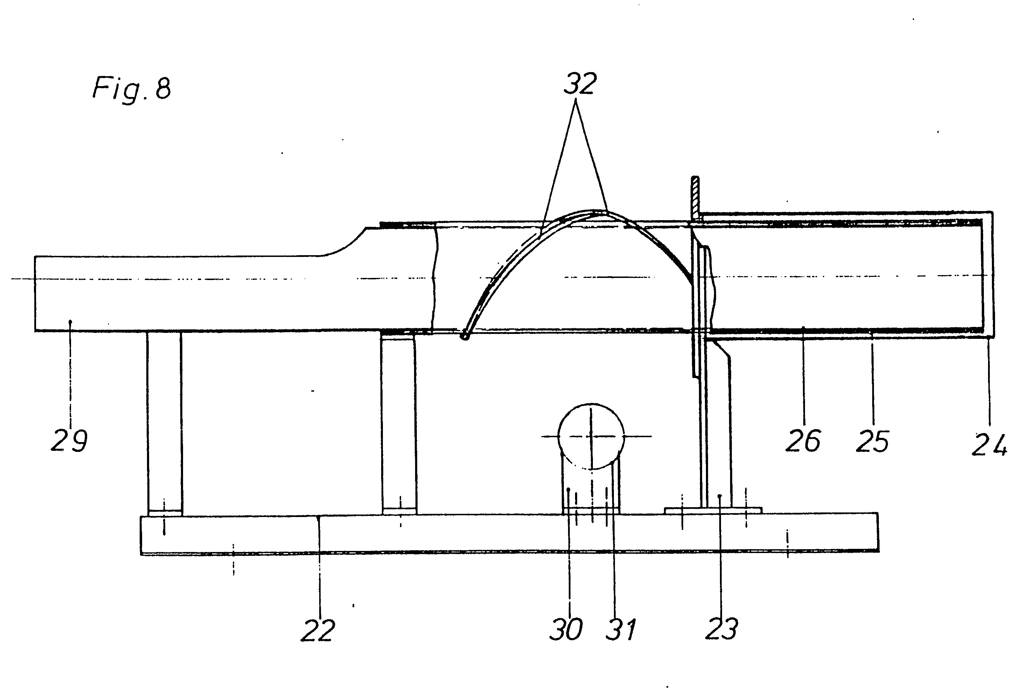

Zur Durchführung des Verfahrens wird eine Vorrichtung gemäß Figuren 7 und 8 vorgeschlagen, bei der das Fleischstück und das Schlauchnetz durch konzentrische Rohre von der zu einem Schlauch gekrümmten Folie getrennt gehalten werden.

Auf eine Arbeitsfläche (22) ist eine Halterung (23) für die konzentrischen Rohre (24, 25, 26) aufgeschraubt. Das Rohr (24) erstreckt sich von der Halterung (23) nach vorne. Es ist mit Flansch (16) und Bajonettverschluß an der Halterung befestigt und kann einen Vorrat von mehreren Metern Schlauchnetz (27) aufnehmen. Das innere Rohr (25, 26) ist doppelwandig ausgeführt, um ein Beschlagen der inneren Gleitfläche für die Folie (28) zu vermeiden, das beim Verpacken von kalten Fleischstücken stattfinden könnte. Der Zwischenraum zwischen den Rohren (25, 26) ist zwecks Wärmedämmung mit PUR-Schaum ausgeschäumt. Das Rohr (26) ist einzeitig aufgeschnitten, um eine Auflegefläche (29) für das zu verpackende Fleisch zu bieten.

Auf der Arbeitsfläche (22) sind auch zwei Rollenhalter (30) befestigt, die eine Folienrolle (31) tragen. Von der Rolle wird die Folie (28) um die Formschulter (32) herumgezogen und zu einem Folienschlauch (33) geformt, dessen Kanten (34) einander lose überlappen. Der Folienschlauch wird in den Ringkanal zwischen den Rohren (24) und (25) bis zu deren vorderen Enden geführt, die gleich weit vorragen.

Die Formschulter (32) besteht vorteilhaft aus einem Stück nichtrostenden Rundstahl von ca. 6 mm Durchmesser, das mit seinen Enden rechts und links des Rohrs (25) an der Halterung (23) befestigt ist und freitragend in geringem Abstand vom Rohr (25) um dieses herumgebogen ist.

Zum Verpacken von Fleisch werden das Schlauchnetz (27) und die Folie (28) soweit nach vorne abgezogen, daß sie sich zusammenfassen und gemeinsam mit einem Clip verschließen lassen. Dann wird ein Fleischstück mit einem Stößel von hinten durch das Rohr (26) in das mit der Folie ausgekleidete Schlauchnetz geschoben, wobei beide so weit von dem Fleischstück mitgenommen werden, bis dieses das Rohr verlassen hat und hinter ihm das Schlauchnetz zusammenfällt. Dieses wird nun wie bei der weiter oben beschriebenen Vorrichtung mit einem Clip verschlossen, durchtrennt und von vorne nach hinten über das Fleisch stramm gezogen und hinter dem Fleisch mit einem Clip verschlossen.

In einer weiteren Ausgestaltung der beschriebenen Vorrichtungen erfolgt der Transport der Fleischstücke durch das Führungsrohr (4) mechanisch. Dazu ist vor dem Einlegeblech (3) ein geeigneter Pneumatikzylinder mit Arbeitsstange und Schiebekolben für die Fleischstücke koaxial zum Führungsrohn (4) vorzusehen.

Weiterhin ist es zweckmäßig, das Netz (17), das sich auf einer in Figur 6 gezeigten Kartusche passenden Durchmessers befindet, zusammen mit dieser auf das Rohr (7, 24) aufzuschieben. Die Kartusche wird in geeigneter Weise, z. B. mittels Bajonettverschluß am Flansch (16) fixiert. Kartuschen und entsprechende Geräte zum Aufziehen von Schlauchnetzen sind handelsüblich.

In einer weiteren Ausgestaltung der Vorrichtungen werden hintereinander zwei Clip-Geräte hinter der Vorrichtung fest installiert, die zur Ausübung ihrer Funktion jeweils in den Weg der eingeschlossenen Schinken geschwenkt werden. Das erste setzt den Clip (18), das zweite den Clip am hinteren Ende des Schinkens (19). Zwischen den beiden Clip-Geräten befindet sich noch eine Vorrichtung zum Durchtrennen von Schlauchnetz und Folien. Der Weg des Schinkens wird dabei durch Blechrinnen, die diese fakultativen Teile der Gesamtanlage verbinden, festgelegt.

**Patentansprüche**

1. Verfahren zur Herstellung von in kompakter Form durch Räuchern und/oder Erwärmen in einem Netz gegarten Fleischwaren, insbesondere Kochschinken, dadurch gekennzeichnet, daß die rohe oder vorhehandelte Fleischware mit einer Umhüllung aus essbarer Kollagenschicht und einem über dieser Umhüllung liegenden Netz beliebiger Maschenform versehen wird und in einem nachfolgenden Arbeitsgang dem endgültigen Garprozess unterworfen wird.

2. Verfahren nach Anspruch 1, dadurch gekennzeichnet, daß die essbare Kollagenschicht gleichzeitig mit dem darüberliegenden Netz auf die Fleischwarenoberfläche aufgebracht wird.

3. Verfahren nach Ansprüchen 1 und 2, dadurch gekennzeichnet, daß als Kollagenschicht ein Goldschlägerhäutchen aufgebracht wird.

4. Verfahren nach Ansprüchen 1 und 2, dadurch gekennzeichnet, daß die Kollagenschicht als Folie aus modifiziertem, nativem Kollagen aufgebracht wird.

5. Verfahren nach Anspruch 4, dadurch gekennzeichnet, daß die Kollagenfolie eine Dicke von 8 $\mu$m bis 40 $\mu$m, bevorzugt von 10 $\mu$m bis 25 $\mu$m hat.

6. Verfahren nach Ansprüchen 4 und 5, dadurch gekennzeichnet, daß eine mit lebensmitteltauglichen Zusätzen versehene Kollagenfolie aufgebracht wird.

7. Verfahren nach Ansprüchen 1 bis 6, dadurch gekennzeichnet, daß die Kollagenfolie in Form zweier Flachfolien auf die Fleichware aufgebracht wird.

8. Verfahren nach Anspruch 7, dadurch gekennzeichnet, dass die Kollagenfolie eine Breite von 12 bis 65, bevorzugt 36 bis 57 cm hat.

9. Verfahren nach Ansprüchen 1 bis 6, dadurch gekennzeichnet, dass die Kollagenfolie in Form einer einzigen Folie auf die Fleischware aufgebracht wird.

10. Verfahren nach Ansprüchen 1 bis 9, dadurch gekennzeichnet, daß das Netz als Schlauchnetz auf die Ware aufgebracht wird.

11. Verfahren Anspruch 10, dadurch gekennzeichnet, daß als Netz ein endlos gewirktes, nahtloses Schlauchnetz aufgebracht wird, das aus elastischen Fäden in Querrichtung und nichtelastischen Fäden in Längsrichtung zur Schlauchachse besteht.

12. Verfahren nach Ansprüchen 1 bis 10, dadurch gekennzeichnet, daß ein Netz aufgebracht wird, dessen Maschenweite zwischen 5 und 15 mm, bevorzugt ca. 10 mm beträgt.

13. Vorrichtung zur Durchführung des Verfahrens nach Ansprüchen 1 bis 12, die ein in ein Führungsrohr (4) übergehendes Einlegeblech (3) für die Fleischware aufweist, dadurch gekennzeichnet, daß oberhalb und unterhalb des Führungsrohres (4) Folienführungsbleche (5, 6) angebracht sind, die sich konisch verjüngend zum Ende der Vorrichtung erstrecken, wobei eins der Führungsbleche (5, 6) in ein das Führungsrohr (4) umgebende Trägerrohr (7) für das Schlauchnetz (17) übergeht und das jeweils andere Folienführungsblech (6, 5) sich in Form eines Zylinderteilmantels in das Trägerrohr (7) hinein erstreckt.

14. Vorrichtung nach Anspruch 13, dadurch gekennzeichnet, daß das untere Folienführungsblech (6) in das Trägerrohr (7) übergeht.

15. Vorrichtung nach Ansprüchen 13 bis 14, dadurch gekennzeichnet, daß oberhalb des Folienführungsblechs (6) im Bereich seiner Anfangskante und unterhalb des Folienführungsblechs (5) im Bereich seiner Anfangskante stabförmige Rollenhalter (8, 9) für Folienrollen (12, 13) angebracht sind und vor den Anfangskanten des unteren und des oberen Folienführungsblechs (5) Rundstäbe (14, 15) angebracht sind.

16. Vorrichtung nach Anspruch 13, dadurch gekennzeichnet, daß die Scheitellinie des Zylinderteilmantels des in das Trägerrohr (7) hinein ragenden Folienführungsblechs (6) mit der Innenwand von (7) fest verbunden ist.

17. Vorrichtung nach Ansprüchen 13-16, dadurch gekennzeichnet, daß sie in eine Rahmenkonstruktion (2) montiert ist, die auf eine Tischplatte (1) geschraubt ist.

18. Vorrichtung zur Durchführung des Verfahrens nach Ansprüchen 1 bis 12, bestehend aus einem Führungsrohr (26), das einseitig unter Bildung einer Auflagenfläche (29) für die Fleischware aufgeschnitten ist, dadurch gekennzeichnet, daß das Führungsrohr (26) von zwei weiteren Rohren (24 und 25) konzentrisch umgeben und die 3 Rohre (24, 25, 26) in einer Halterung (23) befestigt sind, wobei das äussere Rohr (24) nur einseitig aus der Halterung (23) vorsteht, mit dieser lösbar verbunden ist, während die beiden Innenrohre (25, 26) aus der Halterung (23) nach beiden Seiten hervorstehen und auf derjenigen Seite der Halterung, auf der die beiden Innenrohre (25, 26) aus der Halterung (23) vorstehen, eine Formschulter (32) zur Bildung eines Folienschlauches aus einer Folienbahn angeordnet ist und wobei die beiden Innenrohre (25, 26) auf der einen Seite der Halterung (23) mit dem Außenrohr (24) bündig abschließen, während auf der anderen Seite der Halterung das Innenrohr (26) mit der Auflagenfläche (29) das mittlere Rohr (25) überragt.

19. Vorrichtung nach Anspruch 18, dadurch gekennzeichnet, daß der Zwischenraum zwischen den Rohren (25) und (26) mit einer Wärmedämmschicht ausgefüllt ist.

20. Vorrichtung nach Ansprüchen 18 bis 19, dadurch gekennzeichnet, daß die Halterung (23) auf eine Tischplatte (22) geschraubt ist.

21. Vorrichtung nach Ansprüchen 13 bis 20, dadurch gekennzeichnet, daß an ihrem Ende eine an sich bekannte Clipvorrichtung angebracht ist.

22. Vorrichtung nach Ansprüchen 13 bis 21, dadurch gekennzeichnet, daß vor dem Einlegeblech (3, 29) ein Pneumatikzylinder mit Arbeitsstange und Schiebekolben für die Fleischware koaxial zum Rohr (4, 26) angebracht und mit einem an sich bekannten Antrieb versehen ist.

23. Vorrichtung nach Ansprüchen 13 bis 22, dadurch gekennzeichnet, daß am Trägerrohr (7) bzw. äußeren Rohr (24) ein Flansch (16) angebracht ist, an dem ein schlauchförmiges Umhüllungsmaterial, insbesondere ein Schlauchnetz auf einer über das Rohr (7, 24) gesteckten Kartusche, bevorzugt mit Bajonettverschluß zu befestigen ist.

## Claims

1. A process for the production of meat products, especially cooked ham, which are cooked in a compact form in a netting by smoking and/or heating, characterized in that said meat product in raw or pre-processed form is covered with a casing of edible collagen layer and an overlying netting of any mesh form desired and is subsequently subjected to a final cooking process.

2. A process according to claim 1, characterized in that the edible collagen sheet is drawn over the surface of the meat product at the same time as the overlying netting.

3. A process according to claims 1 and 2, characterized in that Goldbeater skin is used as collagen sheet.

4. A process according to claims 1 and 2, characterized in that the collagen sheet is applied as a foil made of modified natural collagen.

5. A process according to claim 4, characterized in that the collagen sheet has a thickness of 8 μm to 40 μm, preferably of 10 μm to 25 μm.

6. A process according to claims 4 and 5, characterized in that a collagen foil having additives compatible with food is applied.

7. A process according to any one of claims 1 to 6, characterized in that the collagen foil is applied to the meat product in the form of two flat foils.

8. A process according to claim 7, characterized in that the collagen foil has a width of 12 to 65, preferably of 36 to 57 cm.

9. A process according to any one of claims 1 to 6, characterized in that the collagen foil is applied to the meat product in the form of one single sheet.

10. A process according to any one of claims 1 to 9, characterized in that the netting is applied to the product as a tubular netting.

11. A process according to claim 10, characterized in that as the netting, a continuously knitted seamless tubular netting is applied which consists of elastic fibres in the transverse direction and non-elastic fibres in the longitudinal direction to the axis of the tube.

12. A process according to any one of claims 1 to 10, characterized in that a netting is applied having a mesh width between 5 and 15 mm, preferably of about 10 mm.

13. A device for carrying out the process according to any one of claims 1 to 12 comprising a feed tray (3) for the meat product, which communicates with a guide tube (4), characterized in that foil guiding metal sheets (5, 6) are provided for above and below of the guide tube (4), said metal sheets tapering towards the end of the device, whereby one of the guiding sheets (5, 6) communicates with a supporting tube (7) for the tubular netting (17), said supporting tube surrounding the guide tube (4), and the other foil guiding metal sheet (6, 5) extends into the supporting tube (7) in the form of a partial cylindrical shell.

14. A device according to claim 13, characterized in that the lower foil guiding metal sheet (6) communicates with the supporting tube (7).

15. A device according to any one of claims 13 to 14, characterized in that above the leading edge portion of the foil guiding metal sheet (6) and below the leading edge portion of the foil guiding metal sheet (5) rod-shaped roll holders (8, 9) are positioned and that in front of the leading edges of the lower and the upper foil guiding metal sheet (5) round bars (14, 15) are positioned.

16. A device according to claim 13, characterized in that the crest line of the partial cylindrical shell of the foil guiding metal sheet (6) which extends into the supporting tube (7) is tightly bonded to the inner wall of (7).

17. A device according to any one of claims 13 to 16, characterized in that it is mounted upon a frame structure (2) which is screwed onto a table top (1).

18. A device for carrying out the process according to any one of claims 1 to 12, consisting of a guide tube (26) which is cut open on one side thereby forming a contact surface (29) for the meat product, characterized in that the guide tube (26) is concentrically surrounded by two other tubes (24 and 25), these three tubes (24, 25, 26) being secured by a holder (23), whereby the outer tube (24) projects from the holder (23) only on one side and is removably connected with the holder, whereas both inner tubes (25, 26) project from the holder (23) on both sides and at that side of the holder from which both inner tubes (25, 26) project, a forming shoulder (32) for forming a foil-tube from a foil sheet is positioned, and whereby both inner tubes (25, 26) have a flush termination with the outer tube (24) on one side of the holder (23), whereas on the other side of the holder the inner tube (26) having the contact surface (29) projects the intermediate tube (25).

19. A device according to claim 18, characterized in that the space between tubes (25) and (26) is filled with a heat insulating layer.

20. A device according to claims 18 and 19, characterized in that the holder (23) is screwed onto a table top (22).

21. A device according to any of claims 13 to 20, characterized in that at its end a clip device is positioned which is known per se.

22. A device according to any of claims 13 to 21, characterized in that in front of the feed tray (3, 29) a pneumatic cylinder arrangement having an operating rod and a sliding piston for the meat product is positioned coaxially to the tube (4, 26) and is provided with a drive known per se.

23. A device according to any of claims 13 to 22, characterized in that a flange (16) is positioned at the supporting tube (7) or outer tube (24) respectively, at which flange a tubular enclosure material, particularly a tubular netting, is to be secured on a cartridge, preferably by a bayonet joint, said cartrigde being attached on the tube (7, 24).

## Revendications

1. Procédé pour la fabrication de charcuterie, en particulier de jambon cuit, soumise dans une forme compacte à un fumage et (ou) dans un filet à une cuisson, caractérisé en ce que la viande crue ou prétraitée est pourvue d'une enveloppe constituée d'une couche de collagène comestible, sur laquelle est placé un filet avec des mailles d'une configuration quelconque, puis soumise dans une opération subséquente à la fumaison ou cuisson finale.

2. Procédé suivant la revendication 1, caractérisé en ce que la couche de collagène comestible est appliquée simultanément avec le filet y superposé sur la surface de la viande ou charcuterie.

3. Procédé suivant les revendications 1 et 2, caractérisé en ce que la couche de collagène est une pellicule de baudruche.

4. Procédé suivant les revendications 1 et 2, caractérisé en ce que la couche de collagène est une pellicule de collagène natif modifié.

5. Procédé suivant la revendication 4, caractérisé en ce que l'épaisseur de la pellicule de collagène est comprise entre 8 et 40 microns et de préférence entre 10 et 25 microns.

6. Procédé suivant les revendications 4 et 5, caractérisé en ce que la pellicule de collagène appliquée contient des additifs admis pour les denrées alimentaires.

7. Procédé suivant les revendications 1 à 6, caractérisé en ce que la couche de collagène est appliquée sur la viande sous forme de deux pellicules plates.

8. Procédé suivant la revendication 7, caractérisé en ce que la feuille de collagène possède une largeur de 12 à 65 et de préférence de 36 à 57 cm.

9. Procédé suivant les revendications 1 à 6, caractérisé en ce que la couche de collagène est appliquée sur la viande à l'aide d'une feuille unique.

10. Procédé suivant les revendications 1 à 9, caractérisé en ce que le filet appliqué sur la viande est un filet tubulaire.

11. Procédé suivant la revendication 10, caractérisé en ce que le filet utilisé est un filet tubulaire tricoté sans fin et sans couture, constitué de fils non élastiques dans le sens parallèle à l'axe du tube et de fils élastiques dans le sens transversal.

12. Procédé suivant les revendications 1 à 10, caractérisé en ce que le filet employé possède des mailles d'une largeur de 5 à 15 et de préférence d'environ 10 mm.

13. Dispositif pour la mise en œuvre du procédé suivant les revendications 1 à 12, qui comprend une platine d'introduction (3) pour la charcuterie, prolongée par un tube de guidage (4), caractérisé en ce que deux tôles de guidage des feuilles (5, 6) — vont en se rétrécissant coniquement vers la partie arrière du dispositif, l'une de ces tôles de guidage (5, 6) se terminant à l'avant d'un tube (7) qui entoure le tube de guidage (4) et sert de support au filet tubulaire (17) et l'autre de ces tôles de guidage (6, 5) pénétrant sous forme d'un manchon cylindrique partiel dans le tube support (7).

14. Dispositif suivant la revendication 13, caractérisé en ce que c'est la tôle de guidage des feuilles inférieures (6), qui se termine à l'avant du tube support (7).

15. Dispositif suivant les revendications 13 et 14, caractérisé en ce que deux tiges porte-rouleaux (8, 9) pour les rouleaux de pellicules (12, 13) sont disposées, l'une au-dessus de la tôle de guidage des feuilles (6) et l'autre au-dessous de la tôle de guidage (5), chaque fois à proximité de leur bord avant, des tiges rondes (14, 15) étant disposées devant les bords avant des tôles de guidage inférieure et supérieure (5, 6).

16. Dispositif suivant la revendication 13, caractérisé en ce que le manchon cylindrique partiel, qui prolonge la tôle de guidage des feuilles (6) à l'intérieur du tube support (7), y est fixé à la paroi interne le long de sa ligne de crête.

17. Dispositif suivant les revendications 13 à 16, caractérisé en ce qu'il est monté dans un bâti (2), qui est vissé sur une table (1).

18. Dispositif pour la mise en œuvre du procédé suivant les revendications 1 à 12, comprenant un tube de guidage (26), dont l'une des extrémités est pourvue d'une découpe unilatérale pour constituer une surface d'introduction (29) de la charcuterie, caractérisé en ce que ce tube de guidage (26) est entouré de façon concentrique de deux autres tubes (24 et 25), les trois tubes (24, 25, 26) étant montés dans une plaque-support (23), le seul tube extérieur (24), monté de façon amovible sur la plaque-support (23), faisant saillie de celle-ci d'un seul côté, tandis que les deux tubes intérieurs (25, 26) s'étendent des deux côtés de la plaque (23) et un épaulement de formage (32) pour la formation d'une pellicule tubulaire au départ d'une bande de feuille étant prévu, les extrémités des deux tubes intérieurs (25 et 26) sont à fleur avec celle du tube extérieur (24) d'un côté de la plaque-support (23), alors que de l'autre côté de la plaque, le tube intérieur (26) dépasse le tube médian (25) de la longueur de la surface d'introduction (29).

19. Dispositif suivant la revendication 18, caractérisé en ce que l'espace entre les tubes (25) et (26) est garni d'une couche d'un matériau calorifuge.

20. Dispositif suivant les revendications 18 et 19, caractérisé en ce que la plaque-support (23) est vissée sur une table (22).

21. Dispositif suivant les revendications 13 à 20, caractérisé en ce qu'il comprend, à la sortie, un organe de pinçage connu en soi.

22. Dispositif suivant les revendications 13 à 21, caractérisé en ce qu'en amont de la platine d'introduction (3, 29) est prévu un cylindre pneumatique à tige et à piston, coaxial au tube (4, 26), pour l'introduction de la charcuterie, actionné de façon connue en soi.

23. Dispositif suivant les revendications 13 à 22, caractérisé en ce que le tube-support (7) ou le tube extérieur (24) est pourvu d'une collerette (16), à laquelle peut être fixé, de préférence à l'aide d'un joint à baïonnette, un matériau d'enrobage tubulaire, en particulier un filet tubulaire, par l'intermédiaire d'une cartouche à glisser sur le tube (7, 24).

Fig.1

Fig. 2

EP 0 175 173 B1

Fig. 3

EP 0 175 173 B1

Fig.4

2
1
16
H
17
18
19

Fig. 5

17
7a
16a

Fig. 6

Fig. 7

6

Fig. 8

29    22    30  31    23    26    25    24

EP 0 175 173 B1